(19) **Europäisches Patentamt**
**European Patent Office**
**Office européen des brevets**

(11) **EP 4 715 129 A1**

(12) **EUROPEAN PATENT APPLICATION**

(43) Date of publication:
**25.03.2026   Bulletin 2026/13**

(21) Application number: **24202227.5**

(22) Date of filing: **24.09.2024**

(51) International Patent Classification (IPC):
*E02F 9/24* $^{(2006.01)}$      *B60W 30/04* $^{(2006.01)}$
*B66C 23/90* $^{(2006.01)}$      *B66F 17/00* $^{(2006.01)}$
*E02F 9/20* $^{(2006.01)}$

(52) Cooperative Patent Classification (CPC):
**E02F 9/24; B60W 30/04; B60W 40/13;**
**B66C 23/905; B66F 17/003; E02F 9/2029;**
B60W 2530/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **JONASSON, Mats**
  **433 49 PARTILLE (SE)**
• **BRATTBERG, Björn**
  **644 33 TORSHÄLLA (SE)**
• **KUMRU, Murat**
  **413 06 GÖTEBORG (SE)**
• **LAINE, Leo**
  **414 84 GÖTEBORG (SE)**

(74) Representative: **Ström & Gulliksson AB**
**P.O. Box 4188**
**203 13 Malmö (SE)**

Remarks:
Amended claims in accordance with Rule 137(2)
EPC.

(54) **TIP-OVER MITIGATION FOR VEHICLES**

(57)   A computer-implemented method for detecting risk of upcoming tip-over for a vehicle is disclosed. The method comprises acquiring (by processing circuitry of a computer system) normal force(s) of the vehicle, comprising a rear wheel normal force, and detecting (by the processing circuitry) risk of upcoming tip-over responsive to the normal force(s) fulfilling a normal force condition.

The method may also comprise acquiring a pitch angle of the vehicle, and detecting the risk of upcoming tip-over may be further responsive to the pitch angle fulfilling a pitch angle condition.

The method may also comprise causing a tip-over mitigation action to be performed responsive to detection of the risk of upcoming tip-over.

The normal force condition may vary dynamically (e.g., based on load mass, load position, ground surface banking, vehicle width, oscillation of lifted load, etc.).

Corresponding computer system, vehicle, computer program product, and non-transitory computer-readable storage medium are also disclosed.

FIG. 4

Description

TECHNICAL FIELD

The disclosure relates generally to vehicle control. In particular aspects, the disclosure relates to tip-over mitigation for vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

The described approaches may be particularly relevant and beneficial for vehicles comprising a movable sub-system for loads (e.g., for lifting, tipping, discharging, etc.). Examples of such vehicles include, wheel loaders and articulated haulers. For example, the movable sub-system for loads may be implemented by an arm-mounted bucket or fork, or by a bucket which is at least partially supported by a movable arm.

BACKGROUND

Tip-over accidents may - generally - occur for any vehicle. Vehicles commonly operating in rough terrains (such as construction sites, forests, agricultural areas, etc.) typically experience tip-over risks more often than vehicles commonly operating in smooth terrains (such as public roads). The risk of tip-over is typically relatively high for load-carrying vehicles where the center of gravity (CoG) of the load is removed relatively far from the main body of the vehicle (e.g., wheel loaders).

It would be beneficial to avoid (or at least reduce the probability of occurrence) of tip-over accidents. Therefore, there is a need for improved approaches to mitigating tip-over for vehicles.

SUMMARY

According to a first aspect of the disclosure, a computer system for detecting risk of upcoming tip-over for a vehicle is provided. The computer system comprises processing circuitry configured to acquire normal force(s) of the vehicle, wherein the normal force(s) comprise a rear wheel normal force, and detect risk of upcoming tip-over responsive to the normal force(s) fulfilling a normal force condition.

The first aspect of the disclosure may seek to improve tip-over mitigation. A technical benefit may include more accurate detection of tip-over risk, yielding more efficient tip-over mitigation (e.g., avoiding tip-over; preferably while not unnecessarily hindering the operation of the vehicle).

For example, the probability of missed detection may be decreased. Missed detection can lead to a tip-over accident due to absence of mitigation action(s). Alternatively or additionally, the probability of false alarm may be decreased. False alarm can lead to decreased efficiency of use of the vehicle due to unnecessary mitigation action(s) interrupting the operation. False alarms may also cause considerable disturbance to an operator of the vehicle.

Optionally in some examples, including in at least one preferred example, the processing circuitry may be further configured to acquire a pitch angle of the vehicle, and detecting the risk of upcoming tip-over may be further responsive to the pitch angle fulfilling a pitch angle condition. A technical benefit may include improved accuracy of detection (e.g., avoiding false alarms when the normal force condition is fulfilled but there is none, or very slight, pitching).

Optionally in some examples, including in at least one preferred example, the processing circuitry may be further configured to cause a tip-over mitigation action to be performed responsive to detection of the risk of upcoming tip-over. A technical benefit may include avoidance of tip-over accident(s).

Optionally in some examples, including in at least one preferred example, the processing circuitry may be further configured to dynamically vary the normal force condition based on one or more of: load mass, load position, ground surface banking, vehicle width, and oscillation of lifted load. A technical benefit may include improved accuracy of detection due to dynamic adaptation to the current situation for the vehicle and its load.

According to a second aspect of the disclosure, a vehicle is provided which comprises the computer system of the first aspect. The second aspect of the disclosure may seek to provide a vehicle with improved tip-over mitigation. A technical benefit may include improved operational efficiency for the vehicle (since tip-over accidents and/or unnecessary mitigation action(s) can be avoided).

According to a third aspect of the disclosure, a computer-implemented method is provided for detecting risk of upcoming tip-over for a vehicle. The method comprises acquiring (by processing circuitry of a computer system) normal force(s) of the vehicle, wherein the normal force(s) comprise a rear wheel normal force, and detecting (by the processing circuitry) risk of upcoming tip-over responsive to the normal force(s) fulfilling a normal force condition.

The third aspect of the disclosure may seek to improve tip-over mitigation. A technical benefit may include more accurate detection of tip-over risk, yielding more efficient tip-over mitigation (e.g., avoiding tip-over; preferably while not unnecessarily hindering the operation of the vehicle).

For example, the probability of missed detection may be decreased. Missed detection can lead to a tip-over accident due to absence of mitigation action(s). Alternatively or additionally, the probability of false alarm may be decreased. False alarm can lead to decreased efficiency of use of the vehicle due to unnecessary mitigation action(s) interrupting the operation. False alarms may also cause considerable disturbance to an operator of the vehicle.

Optionally in some examples, including in at least one preferred example, the normal force condition may comprise the rear wheel normal force being less than a threshold value for rear wheel normal force. A technical benefit may include that simple and robust detection is enabled.

Optionally in some examples, including in at least one preferred example, the normal force(s) may further comprise a front wheel normal force, and the normal force condition may comprise a ratio between the front wheel normal force and the rear wheel normal force exceeding a threshold value for normal force ratio. A technical benefit may include improved accuracy of detection (e.g., avoiding false alarms when a rear wheel traverses an indention in the ground surface).

Optionally in some examples, including in at least one preferred example, the method may further comprise acquiring (by the processing circuitry) a pitch angle of the vehicle, and detecting the risk of upcoming tip-over may be further responsive to the pitch angle fulfilling a pitch angle condition. A technical benefit may include improved accuracy of detection (e.g., avoiding false alarms when the normal force condition is fulfilled but there is none, or very slight, pitching).

Optionally in some examples, including in at least one preferred example, the pitch angle condition may comprise one or more of: the pitch angle exceeding a threshold value for pitch angle, and a change rate of the pitch angle exceeding a threshold value for pitch angle rate.

Optionally in some examples, including in at least one preferred example, the method may further comprise causing (by the processing circuitry) a tip-over mitigation action to be performed responsive to detecting the risk of upcoming tip-over. A technical benefit may include avoidance of tip-over accident(s).

Optionally in some examples, including in at least one preferred example, the tip-over mitigation action may comprise one or more of: issuing a warning message via an operator interface, inhibiting continued lifting of load, and lowering a lifted load. A technical benefit of issuing a warning message via an operator interface may include that the tip-over mitigation may be controlled by an operator of the vehicle (thereby benefitting from the operators assessment of the current situation). A technical benefit of inhibiting continued lifting of load and/or lowering a lifted load may include that the tip-over mitigation may be performed automatically (thereby decreasing latency).

Optionally in some examples, including in at least one preferred example, the normal force condition may vary dynamically based on one or more of: load mass, load position, ground surface banking, vehicle width, and oscillation of lifted load. A technical benefit may include improved accuracy of detection due to dynamic adaptation to the current situation for the vehicle and its load.

According to a fourth aspect of the disclosure, a computer program product is provided, which comprises program code for performing, when executed by the processing circuitry, the method of any of the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect.

The fourth and fifth aspects of the disclosure may seek to convey program code for improved tip-over mitigation. A technical benefit may include that new vehicles and/or legacy vehicles may be conveniently configured, by software installation/update, to acquire normal force(s) of the vehicle, wherein the normal force(s) comprise a rear wheel normal force, and detect risk of upcoming tip-over responsive to the normal force(s) fulfilling a normal force condition.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

FIG. 1 is a collection of schematic drawings illustrating tip-over scenarios for a vehicle according to some examples.
FIG. 2 is a schematic drawing illustrating a vehicle according to some examples.
FIG. 3 is a schematic drawing illustrating forces and angles for a vehicle dynamics model according to some examples.
FIG. 4 is a flowchart illustrating a method according to some examples.
FIG. 5 is a schematic diagram illustrating a computer system for implementing examples disclosed herein, according to some examples.
FIG. 6 is a schematic drawing illustrating a computer program product, in the form of a non-transitory computer-readable storage medium, according to some examples.
FIG. 7 is a schematic block diagram of a control unit according to some examples.

**DETAILED DESCRIPTION**

The detailed description set forth below provides information and examples of the disclosed technology with sufficient detail to enable those skilled in the art to practice the disclosure.

As already mentioned, tip-over accidents may - in principle - occur for any vehicle, while the risk of tip-over is typically higher for load-carrying vehicles where the center of gravity (CoG) of the load is removed relatively far from the main body of the vehicle. Examples of the latter type of vehicles include vehicles comprising a movable sub-system for loads, such as wheel loaders (where an arm-mounted bucket or fork is configured to hold a load well distanced from, e.g., in front of, the vehicle main body) and articulated haulers (where a bucket at least partially supported by a movable arm is configured to discharge a load by tipping the bucket, during which the load may become at least increasingly distanced from the vehicle main body).

It would be beneficial if tip-over accidents could be avoided (or if the probability of occurrence could at least be decreased). For example, a tip-over accident may cause damage to the vehicle, and/or may interrupt/-delay a task to be performed by a vehicle.

On the other hand, an over-cautious approach may unnecessarily interrupt/delay a task to be performed by a vehicle. For example, unnecessarily limiting the operations of a vehicle to provide a safety margin for tip-over may be inefficient. Furthermore, unnecessary tip-over warnings may irritate the operator, and possible cause them to ignore tip-over warnings that are indeed necessary.

The approaches suggested herein aim to improve tip-over mitigation (e.g., in terms of decreasing probability of occurrence while avoiding unnecessary mitigation actions). The improvement is enabled by improved detection of the risk of upcoming tip-over (e.g., in terms of accuracy, robustness, etc.). The improved tip-over mitigation can lead to fewer tip-over accidents and/or increased efficiency of vehicle use.

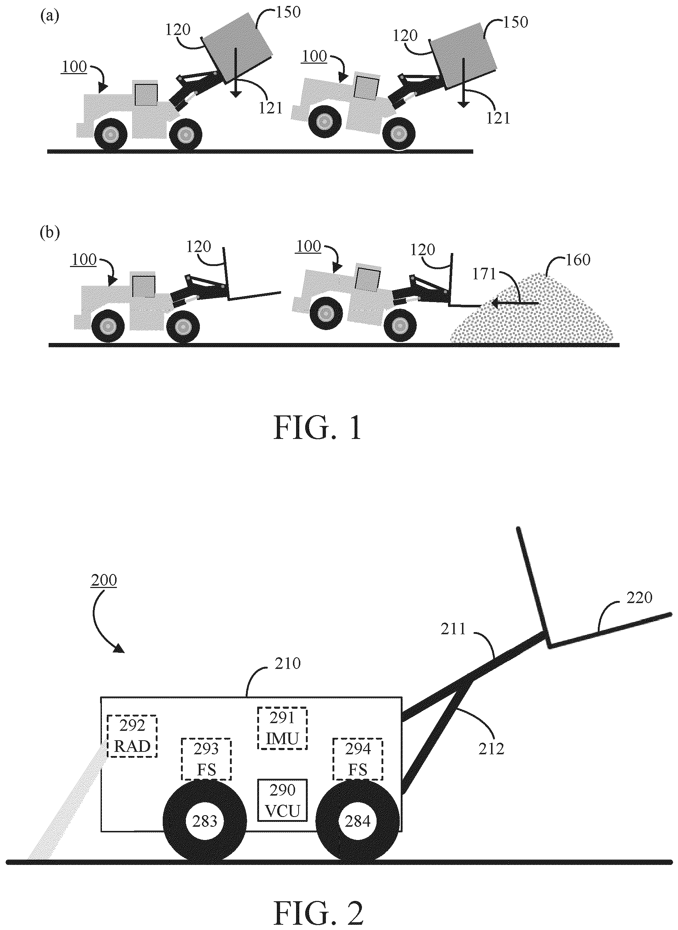

**FIG. 1** schematically illustrates two example tip-over scenarios for a wheel loader 100 with an arm-mounted bucket **120.**

In scenario (a), the arm-mounted bucket **120** holds a load **150** (with gravitational force **121**) in a relatively highly raised position and/or with a relatively far out-stretched arm, as illustrated in the left portion of scenario (a). This typically leads to an increased risk of tip-over, as illustrated in the right portion of scenario (a). More generally, when the CoG of the load **150** is kept relatively close to the main body of the wheel loader **100,** there is typically no (or very low) risk of tip-over, but when the CoG of the load **150** is relatively distanced from the main body of the wheel loader **100,** as illustrated in scenario (a), there is typically an increased risk of tip-over.

In scenario (b), the arm-mounted bucket **120** is used for bulk load **160.** When the bucket **120** is empty, as illustrated in the left portion of scenario (b), there is typically no (or very low) risk of tip-over. When the bucket **120** is scooping up bulk load **160** with a lowered arm such that a relatively high longitudinal force **171** acts on the bucket **120,** as illustrated in the right portion of scenario (b), there is typically an increased risk of tip-over if the longitudinal force **171** translates to a tipping moment.

Generally, the distance between the CoG of the load and the main body of the vehicle may be defined in any suitable way.

For example, the distance may be defined as a distance between the CoG of the load (including or excluding the movable sub-system for loads) and the CoG of the main body of the vehicle (excluding or including the movable sub-system for loads). The distance may, for example, be measured for perpendicular projection of the CoGs on a ground plane, for gravitational projection of the CoGs on a ground plane, or for perpendicular projection of the CoGs on a horizontal plane of a vehicle-centric coordinate system.

Alternatively or additionally, the distance between the CoG of the load and the main body of the vehicle may be defined as a shortest distance between the CoG of the load - or a projection thereof - (including or excluding the movable sub-system for loads) and an area - or a projection thereof - extending between the contact patches between the vehicle and the ground surface (typically wheels).

**FIG. 2** schematically illustrates a side view of an example vehicle **200** where the techniques disclosed herein can be advantageously applied. The vehicle **200** comprises a wheel loader with a main body **210** resting on wheels **283, 284,** and a movable sub-system for loads implemented by a bucket **220** mounted on a movable arm **211, 212** in a known manner. For example, the vehicle **200** may correspond to the wheel loader **100** of **FIG. 1.**

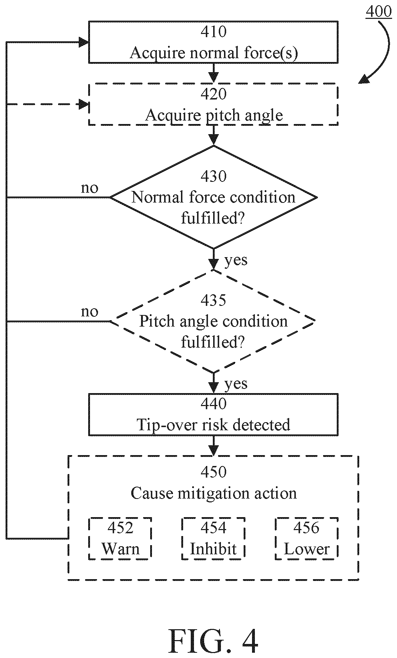

The vehicle **200** may comprise a vehicle control unit (VCU) **290** configured to perform various vehicle control functions, such as - for example - vehicle motion management (VMM). For example, a VCU **290** may be configured to perform one or more steps as exemplified later in connection with **FIG. 4.** Thus, the techniques disclosed herein may be performed by a VCU **290.**

The vehicle **200** may further comprise a force sensor (FS) **293** configured to perform measurements for determining or estimating a normal force for the rear wheel(s) **283,** and (optionally) a force sensor (FS) **294** configured to perform measurements for determining or estimating a normal force for the front wheel(s) **284.**

For example, measurements may relate to normal force(s) w.r.t. the ground surface or w.r.t. a gravitationally horizontal plane. In some examples, the force sensor(s) **293, 294** may measure a metric that is not in itself a wheel normal force (e.g., one or more of: force(s) experienced at wheel suspension, force(s) experienced at axle suspension, changes in tire inflation pressure, etc.) and the wheel normal force may be determined or estimated from the measured metric.

The force sensor(s) **293, 294** may generally comprise any suitable sensor(s) and may generally use any suitable measurements for any suitable metric. In some examples, the force sensor(s) **293, 294** may comprise one or more of: load sensor(s), hydraulic pressure sensor(s), tire pressure sensor(s), etc.

For example, load sensor(s) may be deployed to measure normal (vertical) load at wheel level or at wheel axle level (e.g., in association with suspension). Alternatively or additionally, hydraulic pressure sensor(s) may be deployed to measure suspension pressure at wheel level or at wheel axle level, and the suspension pressure may be translated to normal load (e.g., increased suspension pressure corresponding to increased normal load).

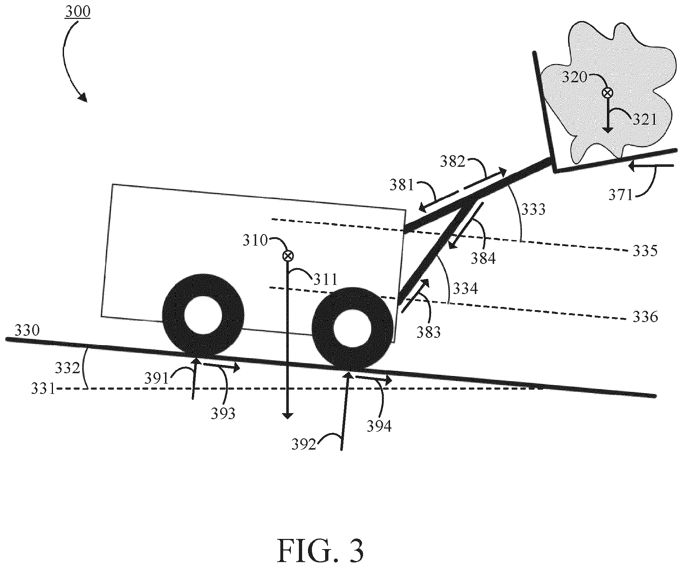

Alternatively or additionally to using normal force sensor(s), one or more other parameter(s) can be measured (e.g., by corresponding sensing device(s)). Such other parameter(s) may be used to derive the normal force(s) using any suitable approach, e.g., a dynamics model of the vehicle as exemplified in connection with **FIG. 3.** Examples of such parameter(s) include, but are not limited to, propulsion force (e.g., measured/provided by propulsion unit(s), such as electric motor(s) and/or an internal combustion engine), vehicle body acceleration (e.g., measured/provided by inertial measurement unit(s) and/or ground-facing Doppler radar(s)), vehicle body moments (e.g., measured/provided by inertial measurement unit(s)), bucket mass and orientation (e.g., measured/provided by measurement unit(s) for hydraulic stroke force and length), wheel speed, etc.

In some examples, a measured metric comprises compression (e.g., in terms of distance) of a spring (e.g., in suspension) or a tire, and the normal force(s) may be derived by application of a known relation between compression and force.

In some examples, pitch and/or roll angle output(s) from an inertial measurement unit (IMU) can be used to estimate normal force(s) based on a vehicle model of forces; including the bucket load mass (e.g., measured), orientation of the lifting arm, and vehicle body mass (typically known).

Even though the principles of the suggested approaches will be exemplified herein by a vehicle with four wheels only (two front wheels **284** and two rear wheels **283**), it should be noted that the suggested approaches are equally applicable for vehicle with more wheels. In the latter case, numerous variants may be applied.

A sub-set of wheels may be selected and the other wheels may be ignored for the purpose of tip-over mitigation, or all wheels may be used for the purpose of tip-over mitigation. For example, only the wheels of a rearmost wheel axle, or only the wheels of a wheel axle located on a rear portion (such as the rear half) of the vehicle main body, may be selected to represent "rear wheel(s)" for the purpose of tip-over mitigation. Alternatively or additionally, a group of wheels (e.g., the wheels of two or more wheel axles located on the rear portion of the vehicle main body) may be selected to represent "rear wheel(s)" for the purpose of tip-over mitigation.

Generally, the wheel normal force may be represented by an individual normal force for a specific wheel, a normal force for a specific wheel axle, a normal force for a group of wheels, or a normal force for a group of wheel axles.

The vehicle **200** may further comprise one or more sensor(s) for determining a pitch angle of the vehicle main body (e.g., in relation to a ground surface and/or in relation to a gravitationally horizontal plane). For example, the vehicle **200** may comprise an inertial measurement unit (IMU) **291** configured to perform measurements for determining or estimating the pitch angle in relation to a gravitationally horizontal plane (e.g., by application of a suitable filter; typically determining angle(s) between accelerometer components and/or integrating angular rates). Alternatively or additionally, the vehicle **200** may comprise a ground-facing Doppler radar (RAD) **292** configured to perform measurements for determining or estimating the pitch angle in relation to a ground plane (e.g., by analyzing the backscatter energy distribution in a two-dimensional space, where a first dimension represents Doppler speed between radar and a ground surface element and a second dimension represents distance between radar and a ground surface element; the energy pattern will typically shift towards smaller distances when the vehicle is pitching).

**FIG. 3** schematically illustrates a side view of an example vehicle **300** (in the form of a wheel loader) where the techniques disclosed herein can be advantageously applied. For example, the vehicle **300** may correspond to the wheel loader **100** of **FIG. 1** and/or the vehicle **200** of **FIG. 2.**

A dynamics model of the vehicle **300** may be formed by considering various forces and angles of the vehicle **300** along with principles of classic physics, and **FIG. 3** represents an example selection of forces and angles which may be used to define the dynamics model of the vehicle **300**.

The main body of the vehicle **300** (excluding or including the movable sub-system for loads) has a mass $m_v$ and a CoG **310** on which gravity $g$ acts by a corresponding force $m_v \cdot g$ **311**. The load (including or excluding the movable sub-system for loads) has a mass $m_b$ and a CoG **320** on which gravity $g$ acts by a corresponding force $m_b \cdot g$ **321**.

The ground surface **330** may differ from a gravitationally horizontal plane **331** by a ground surface angle (road slope) **332,** and the vehicle **300** may be pitched relative to the ground surface **330** by a vehicle-ground angle (which is zero in **FIG. 3**). The pitch angle $\varphi$ of the vehicle **300** may be represented by the angle of the vehicle relative to the gravitationally horizontal plane **331** (i.e., the ground surface angle **332** combined with the vehicle-ground angle), or by the angle of the vehicle relative to the ground surface **330** (i.e., the vehicle-ground angle).

A rear wheel normal force $F_{zr}$ (w.r.t. the ground surface **330**) is illustrated by **391,** and a front wheel normal force $F_{zf}$ (w.r.t. the ground surface **330**) is illustrated by **392**. The wheels may also experience lateral and/or longitudinal forces at the contact patches between the vehicle **300** and the ground surface **330** (e.g., friction forces), which are exemplified in **FIG. 3** by respective longitudinal forces (e.g., corresponding to propulsion forces) $F_{xr}$ **393** and $F_{xf}$ **394**. Rear and front wheel normal forces w.r.t. gravitationally horizontal plane **331** may be easily determined based on $F_{zr}$, $F_{xr}$, $F_{zf}$, $F_{xf}$, or vice versa.

Other forces and angles that may be relevant for the dynamics model of the vehicle **300** include forces experienced by the a movable sub-system, such as tension forces $F_{c1-1}$ **381**, $F_{c1-2}$ **382**, $F_{c2-1}$ **383**, $F_{c2-2}$ **384** experienced by the movable arm in a known manner, a longitudinal force $F_b$ **371** acting on the bucket (e.g., due to scooping up load), and angles $\theta_1$ **333** and $\theta_2$ **334** of between the forces **381, 382, 383, 384** experienced by the movable arm and respective planes **335, 336** defined in a vehicle-centric coordinate system, which are parallel to the ground surface **330** in the pitch dimension when the vehicle-ground angle is zero.

In some examples, the mass of the vehicle body is known (e.g., resulting from the vehicle design) and the mass of the bucket load is determined/estimated by measurements. For example, the mass of the bucket load may be based on measurements of the pressure in the hydraulics of the arm). In some examples, the mass of the vehicle body may be dynamically updated (e.g., based on longitudinal acceleration information - from time derivative of wheel speed, from radar measurements, from IMU measurements, or similar - and/or based on torque information - from propulsion/brake actuators).

The model (which may be seen as two masses with an arm between them) may utilize a moment equilibrium in pitch and a vertical force equilibrium for the two masses combined (with known arm angle) to determine normal force(s) and pitch. With an IMU in the vehicle body, acceleration(s) and angular rate(s) are known for the two-mass system. The torque may be utilized to take the longitudinal force $F_b$ **371** into account.

**FIG. 4** illustrates a computer-implemented method **400** according to some examples. The method **400** is for detecting risk of upcoming tip-over for a vehicle. The method **400** is also suitable for tip-over mitigation.

For example, the method **400** may be applied in relation to any of the vehicles **100, 200, 300** illustrated in **FIGs. 1-3.** In some examples, the method **400** is performed by processing circuitry forming part of a computer system for tip-over mitigation. For example, the method **400** may be performed by the VCU **290** illustrated in **FIG. 2.**

As illustrated by **410**, normal forces of the vehicle are acquired, including a rear wheel normal force (compare with **391** of **FIG. 3**) and (optionally) a front wheel normal force (compare with **392** of **FIG. 3**). The acquired normal forces may be normal relative to a ground plane (compare with **330** of **FIG. 3**) or relative to a gravitationally horizontal plane (compare with **331** of **FIG. 3**). In some examples, acquiring the normal forces may comprise receiving indication(s) of the normal forces from device(s) where they have been measured/derived (compare with **293, 294** of **FIG. 2**). In some examples, acquiring the normal forces may comprise receiving indication(s) of other parameter(s) from device(s) where they have been measured/derived, and deriving the normal forces based on the other parameter(s) (e.g., using a dynamics model of the vehicle as exemplified in connection with **FIG. 3**).

As illustrated by optional **420,** a pitch angle of the vehicle may also be acquired. The acquired pitch angle may be relative to a ground plane or relative to a gravitationally horizontal plane (compare with **332** of **FIG. 3**). In some examples, acquiring the pitch angle may comprise receiving indication(s) of the pitch angle from device(s) where it has been measured/derived (e.g., IMU and/or Doppler radar; compare with **291, 292** of **FIG. 2**). In some examples, acquiring the pitch angle may comprise receiving indication(s) of other parameter(s) from device(s) where they have been measured/derived (e.g., IMU and/or Doppler radar), and deriving the pitch angle based on the other parameter(s) (e.g., using a dynamics model of the vehicle as exemplified in connection with **FIG. 3**).

Generally, the acquired pitch angle may comprise one or more of: an actual (measured) pitch angle (sign and/or magnitude), a trend of the pitch angle (sign and/or change rate), and a predicted pitch angle (e.g., predicted based on measurements of actual value and/or trend).

The pitch angle may be predicted by any suitable prediction approach. For example, an Euler forward prediction may be applied,

$$\varphi_{k+1} = \varphi_k + \gamma \cdot \frac{\varphi_k - \varphi_{k-1}}{t_s}$$

, where $\varphi_k$ denotes a current sample of the pitch angle, $\varphi_{k-1}$ denotes a previous sample of the pitch angle, $\varphi_{k+1}$ denotes a predicted sample of the pitch angle, $t_s$ represents the sampling periodicity, and $\gamma$ is a tuning factor.

As illustrated by **430,** it is determined whether a normal force condition is fulfilled. If so (yes-path) the process continues towards **435** and **440**. Otherwise (no-path), it may be considered that there is no risk of tip-over detected, and the process returns to **410** or **420** (e.g., depending on when, or how often, new measurements are performed for the normal force acquisition and for the pitch angle acquisition, respectively).

As illustrated by optional **435,** it may be determined whether a pitch angle condition is fulfilled. If so (yes-path) the process continues towards **440**. Otherwise (no-path) the process returns to **410** or **420** (e.g., depending on when, or how often, new measurements are performed for the normal force acquisition and for the pitch angle acquisition, respectively).

When the process reaches **440,** a risk of upcoming tip-over is considered detected.

As illustrated by optional **450,** a tip-over mitigation action may be caused (e.g., by sending a control signal) responsive to detecting the risk of upcoming tip-over in **440.**

Generally, the tip-over mitigation action may comprise any suitable action(s). For example, the tip-over mitigation action may comprise automatically controlling some vehicle function (e.g., operation of a movable sub-system for loads, active suspension, etc.) and/or providing information to an operator of the vehicle for determination of whether some consequential vehicle control should be taken (and, if so, which).

Some example tip-over mitigation actions include issuing a warning message via an operator interface (as illustrated by optional **452**), (automatically) inhibiting continued lifting of load (as illustrated by optional **454**), and (automatically) lowering a lifted load (as illustrated by optional **456**). Examples of operator interfaces suitable for issuing a warning message include: visual interfaces such as warning lights and vehicle touch screen, audio interfaces such as alarms and spoken warning, tactile interfaces such as vibration of steering wheel, pedals, and levers. Alternatively or additionally, the tip-over mitigation action may comprise (automatically) inhibiting and/or reversing any other ongoing operation of the vehicle as suitable. For example, the tip-over risk may be reduced by reversing the vehicle if it has entered a steep downward slope. If the vehicle is configured with a controllable active suspension system, the tip-over mitigation action may comprise (automatically) lifting the front part of the vehicle and/or lowering the rear part of the vehicle.

Generally, the conditions of **430** and **435** may be any suitable conditions.

For example, the condition of **430** may comprise the rear wheel normal force being less than a threshold value for rear wheel normal force, $F_{zr} < T_1$. This condition indicates that the rear wheel may be about to lift from the ground (e.g., due to tip-over, due to uneven ground, etc.). Typically, $T_1$ may be a relatively small value (e.g., close to zero). Alternatively, the condition of **430** may comprise the rear wheel normal force being equal to zero, $F_{zr} = 0$.

Alternatively or additionally, the condition of **430** may comprise a ratio between the front wheel normal force and the rear wheel normal force exceeding a threshold value for normal force ratio, $\frac{F_{zf}}{F_{zr}} > T_2$. This condition indicates that the total load is mainly carried by the front wheels (e.g., due to tip-over). Typically, $T_2$ is a value larger than one (e.g., between one and two, between two and three, or larger than three). It should be noted that a bias for the condition defined by $T_1$ (e.g., due to the mass of vehicle plus load) is typically irrelevant for the condition defined by $T_2$.

In some examples, both of the above conditions for normal force(s) should be fulfilled for following the yes-path out of **430** (i.e., load carried mainly by front wheels and rear wheels about to lift). This approach may improve the accuracy of the detection (e.g., reduce false alarms which may be issued if only one of the conditions is fulfilled while not increasing the missed detection probability).

Alternatively or additionally, the condition of **435** may comprise the pitch angle (actual or predicted) exceeding a threshold value for pitch angle, $\varphi > T_3$ or $|\varphi| > T_3$. This condition indicates that the vehicle is pitching (e.g., due to tip-over, due to uneven ground, etc.).

Alternatively or additionally, the condition of **435** may comprise a change rate of the pitch angle exceeding a threshold value for pitch angle rate, $\frac{\partial}{\partial t}\varphi > T_4$ or $\left|\frac{\partial}{\partial t}\varphi\right| > T_4$. This condition indicates that the vehicle pitch is changing fast. Yet alternatively or additionally, the condition of **435** may comprise that the sign of the change rate of the pitch angle is the same as the sign of the pitch angle, $\frac{\partial}{\partial t}\varphi > 0$ when $\varphi > 0$, $\frac{\partial}{\partial t}\varphi < 0$ when $\varphi < 0$. This condition indicates that the pitch angle magnitude is growing. In some examples, only positive pitch angles (vehicle leaning forward; e.g., when the bucket is towards the front end of the vehicle) or only negative pitch angles (vehicle leaning backward; e.g., when the bucket is towards the rear end of the vehicle) are considered.

For example, suitable threshold values may be determined by experimentation and/or simulation.

In some examples, two or more of the above three conditions for pitch angle should be fulfilled for following the yes-path out of **435**. This approach may improve the accuracy of the detection (e.g., reduce false alarms which may be issued if only one of the conditions is fulfilled while not increasing the missed detection probability).

Generally, any one or more of the above conditions (two for normal force(s) and three conditions for pitch angle) may be used to determine whether there is a risk of upcoming tip-over.

In various examples, any one or more of the above conditions (two for normal force(s) and three conditions for pitch angle) may be a fixed condition, or may vary dynamically. For example, the value(s) of one or more of the thresholds $T_1$, $T_2$, $T_3$, $T_4$ may vary dynamically. To this end, the method **400** may, in some examples, comprise reoccurring determining and/or adjusting one or more threshold value(s) (e.g., using a dynamics model of the vehicle as exemplified in connection with **FIG. 3**). The dynamic variation of the condition(s) (e.g., of the threshold value(s)) may be based on any suitable considerations.

For example, the dynamic variation of one or more of the condition(s) (e.g., of corresponding threshold value(s)) may be based on a load mass (i.e., mass of the load carried by the bucket or fork). This parameter may be used directly, or may be used to determine the total mass of vehicle plus load. A relatively high mass (total or load) may correspond to a relatively high value for $T_1$, a relatively high load mass may correspond to a relatively low value for $T_3$ and/or $T_4$. Put differently, when a first mass corresponding to first value(s) for $T_1$, $T_3$, $T_4$ is higher than a second mass corresponding to second value(s) for $T_1$, $T_3$, $T_4$, the first value for $T_1$ may be higher than the second value for $T_1$, and/or the first value for $T_3$ may be lower than the second value for $T_3$, and/or the first value for $T_4$ may be lower than the second value for $T_4$. Alternatively, the threshold value(s) may be unaffected by load mass.

Alternatively or additionally, the dynamic variation of one or more of the condition(s) (e.g., of corresponding threshold value(s)) may be based on a load position (e.g., defined by one or more of: a length of an extendable arm, a lifting height of a bucket or fork, etc.). A relatively long extended arm may correspond to one or more of: a relatively high value for $T_1$, a relatively low value for $T_2$, a relatively low value for $T_3$, and a relatively low value for $T_4$. A relatively high lifted bucket/fork may correspond to one or more of: a relatively high value for $T_1$, a relatively low value for $T_2$, a relatively low value for $T_3$, and a relatively low value for $T_4$. Put differently, when a first lifting height corresponding to first value(s) for $T_1$, $T_2$, $T_3$, $T_4$ is higher than a second lifting height corresponding to second value(s) for $T_1$, $T_2$, $T_3$, $T_4$, the first value for $T_1$ may be higher than the second value for $T_1$, and/or the first value for $T_2$ may be lower than the second value for $T_2$, and/or the first value for $T_3$ may be lower than the second value for $T_3$, and/or the first value for $T_4$ may be lower than the second value for $T_4$. Alternatively, the threshold value(s) may be unaffected by load position.

Yet alternatively or additionally, the dynamic variation of one or more of the condition(s) (e.g., of corresponding threshold value(s)) may be based on ground surface banking. With large banking, there is typically a higher risk of tip-over due to the lateral imbalance introduced. A relatively large banking may correspond to one or more of: a relatively high value for $T_1$, a relatively low value for $T_3$, and a relatively low value for $T_4$. Put differently, when a first banking corresponding to first value(s) for $T_1$, $T_3$, $T_4$ is larger than a second banking corresponding to second value(s) for $T_1$, $T_3$, $T_4$, the first value for $T_1$ may be higher than the second value for $T_1$, and/or the first value for $T_3$ may be lower than the second value for $T_3$, and/or the first value for $T_4$ may be lower than the second value for $T_4$. Alternatively, the threshold value(s) may be unaffected by surface banking.

Yet alternatively or additionally, the dynamic variation of one or more of the condition(s) (e.g., of corresponding threshold value(s)) may be based on a vehicle width (e.g., largest lateral distance between support points such as wheels and other contacts between vehicle and ground). For example, the vehicle width may be increased during stationary operations by utilizing support structures which extend outwards from the vehicle; beyond the wheels. A relatively small vehicle width may correspond to one or more of: a relatively high value for $T_1$, a relatively low value for $T_2$, a relatively low value for $T_3$, and a relatively low value for $T_4$. Put differently, when a first vehicle width corresponding to first value(s) for $T_1$, $T_2$, $T_3$, $T_4$ is smaller than a second vehicle width corresponding to second value(s) for $T_1$, $T_2$, $T_3$, $T_4$, the first value for $T_1$ may be higher than the second value for $T_1$, and/or the first value for $T_2$ may be lower than the second value for $T_2$, and/or the first value for $T_3$ may be lower than the second value for $T_3$, and/or the first value for $T_4$ may be lower than the second value for $T_4$. Alternatively, the threshold value(s) may be unaffected by vehicle width.

Yet alternatively or additionally, the dynamic variation of one or more of the condition(s) (e.g., of corresponding threshold value(s)) may be based on an amount of oscillation of a lifted load (e.g., derived from variations in measured parameters, such as forces, relating to the movable sub-system for loads). With prominent oscillations (e.g., high magnitude, and/or a frequency close to a resonance frequency of the vehicle), there is typically a higher risk of tip-over due to the lateral imbalance introduced. A relatively prominent oscillation may correspond to one or more of: a relatively high value for $T_1$, a relatively low value for $T_2$, a relatively low value for $T_3$, and a relatively low value for $T_4$. Put differently, when a first oscillation corresponding to first value(s) for $T_1$, $T_2$, $T_3$, $T_4$ is more prominent than a second oscillation corresponding to second value(s) for $T_1$, $T_2$, $T_3$, $T_4$, the first value for $T_1$ may be higher than the second value for $T_1$, and/or the first value for $T_2$ may be lower than the second value for $T_2$, and/or the first value for $T_3$ may be lower than the second value for $T_3$, and/or the first value for $T_4$ may be lower than the second value for $T_4$. Alternatively, the threshold value(s) may be unaffected by the oscillation of a lifted load.

It could be beneficial to define several (two or more) severity levels or "risk categories" for the tip-over risk (e.g., defining different risk categories by using different subsets of the conditions described above for **430** and **435** and/or by using different value(s) for one or more of the thresholds $T_1$, $T_2$, $T_3$, $T_4$). Thus, the applicable risk category could be determined when the tip-over risk is detected in **440**. Then, different tip-over mitigation action(s) may be caused in **450** depending on the applicable risk category.

For example, one category may relate to a relatively low risk of tip-over, and a corresponding mitigation action might be to provide a mild warning to the vehicle operator, while another category may relate to a relatively high risk of tip-over, and a corresponding mitigation action might be to provide a severe warning to the vehicle operator and/or automatically inhibit/reverse an ongoing operational task. Of course, any suitable number of categories may be applied, each corresponding to any suitable tip-over mitigation task(s).

In some examples, a category relating to a relatively low risk of tip-over may be defined by considering only condition(s) of **430,** while a category relating to a relatively high risk of tip-over may be defined by considering condition(s) of both **430** and **435.**

Alternatively or additionally, in some examples, a category relating to a relatively low risk of tip-over may be defined by considering one or more of: a relatively low value for $T_1$, a relatively high value for $T_2$, a relatively high value for $T_3$, and a relatively high value for $T_4$, while a category relating to a relatively high risk of tip-over may be defined by considering one or more of: a relatively high value for $T_1$, a relatively low value for $T_2$, a relatively low value for $T_3$, and a relatively low value for $T_4$.

By differentiating via different risk categories and corresponding different mitigation actions, tip-over may still be avoided (to the same or higher extent than for other approaches) while irritation and/or operation interruption caused by false alarms can be decreased.

For example, if the normal force condition is fulfilled and the pitch angle and its change rate are relatively high, a category relating to a relatively high risk of tip-over may be used, and automatic inhibition/reversal of an ongoing operational task may be performed. This typically reduces the latency compared to if the corresponding inhibition/reversal was performed by an operator, which may prevent a tip-over accident that could have occurred due to the latency of the operator.

Alternatively or additionally, if the normal force condition is fulfilled but the pitch angle and/or its change rate are relatively low, a category relating to a relatively low (but still relevant) risk of tip-over may be used, and a mild (not so irritating but yet noticeable) operator warning may be issued.

Generally, it should be noted that the approaches described herein may be used together with already existing approaches for avoiding tip-over (e.g., load moment indication and automatic level control of the bucket).

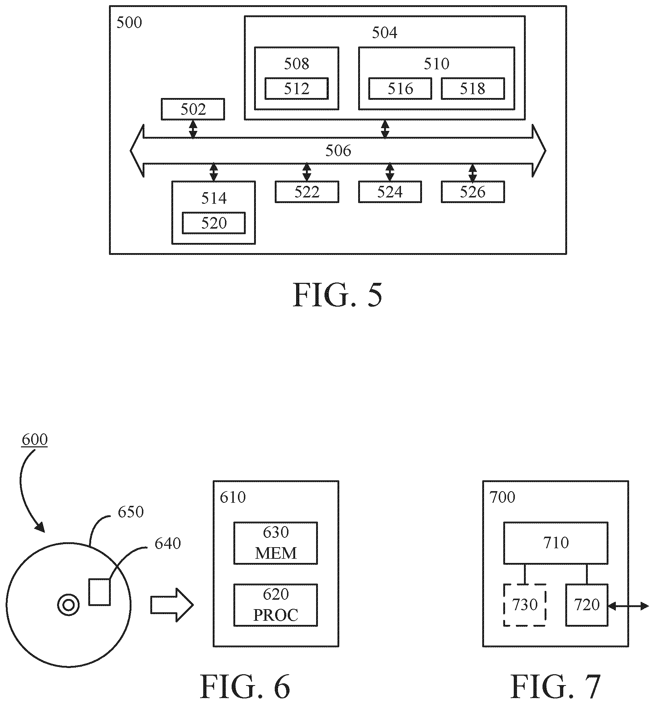

FIG. 5 is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device

interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 6** illustrates a computer program product **600** exemplified as a non-transitory computer-readable medium in the form of a compact disc read-only memory (CD ROM) **650.** The computer-readable medium has stored thereon program code **640** comprising instructions. The program code is loadable into processing circuitry (PROC; e.g., a data processing unit) **620,** which may, for example, be comprised in a control unit **610.** When loaded into the processing circuitry, the program code may be stored in a memory (MEM) **630** associated with, or comprised in, the processing circuitry. According to some examples, the program code may, when loaded into, and run by, the processing circuitry, cause execution of method steps according to, for example, any of the methods described herein.

**FIG. 7** schematically illustrates, in terms of a number of functional units, the components of a control unit **700** according to some examples. This control unit **700** may be comprised in the vehicle **100, 200, 300;** e.g., in the form of a VCU **290.** Processing circuitry **710** is provided using any combination of one or more of a suitable central processing unit CPU, multiprocessor, microcontroller, digital signal processor DSP, etc., capable of executing software instructions stored in a computer program product, e.g. in the form of a storage medium **730.** The processing circuitry **710** may further be provided as at least one application specific integrated circuit ASIC, or field programmable gate array FPGA.

Particularly, the processing circuitry **710** is configured to cause the control unit **700** to perform a set of operations, or steps, such as any of the methods described herein.

For example, the storage medium **730** may store the set of operations, and the processing circuitry **710** may be configured to retrieve the set of operations from the storage medium **730** to cause the control unit **700** to perform the set of operations. The set of operations may be provided as a set of executable instructions. Thus, the processing circuitry **710** is thereby arranged to execute methods as herein disclosed. In particular, there is disclosed a control unit **700** for controlling a vehicle **100, 200, 300** comprising a movable sub-system for loads, such as wheel loaders and articulated haulers, the control unit comprising processing circuitry **710,** an interface **720** coupled to the processing circuitry **710,** and a memory **730** coupled to the processing circuitry **710,** wherein the memory comprises machine readable computer program instructions that, when executed by the processing circuitry, causes the control unit to perform the methods discussed herein.

The storage medium **730** may also comprise persistent storage, which, for example, can be any single one or combination of magnetic memory, optical memory, solid state memory or even remotely mounted memory.

The control unit **700** may further comprise an interface **720** for communications with at least one external device. As such, the interface **720** may comprise one or more transmitters and receivers, comprising analogue and digital components and a suitable number of ports for wireline or wireless communication.

The processing circuitry **710** controls the general operation of the control unit **700,** e.g., by sending data and control signals to the interface **720** and the storage medium **730,** by receiving data and reports from the interface **720,** and by retrieving data and instructions from the storage medium **730.** Other components, as well as the related functionality, of the control node are omitted in order not to obscure the concepts presented herein.

A non-exhaustive list of examples:

**Example 1:** A computer system for detecting risk of upcoming tip-over for a vehicle, the computer system comprising processing circuitry configured to: acquire normal force(s) of the vehicle, wherein the normal force(s) comprise a rear wheel normal force; and detect risk of upcoming tip-over responsive to the normal force(s) fulfilling a normal force condition.

**Example 2:** The computer system of **Example 1,** wherein the normal force condition comprises the rear wheel normal force being less than a threshold value for rear wheel normal force.

**Example 3:** The computer system of any of **Examples 1-2,** wherein the normal force(s) further comprise a front wheel normal force, and wherein the normal force condition comprises a ratio between the front wheel normal force and the rear wheel normal force exceeding a threshold value for normal force ratio.

**Example 4:** The computer system of any of **Examples 1-3,** wherein the processing circuitry is further configured to acquire a pitch angle of the vehicle, wherein detecting the risk of upcoming tip-over is further responsive to the pitch angle fulfilling a pitch angle condition.

**Example 5:** The computer system of **Example 4,** wherein the pitch angle condition comprises one or more of: the pitch angle exceeding a threshold value for pitch angle, and a change rate of the pitch angle exceeding a threshold value for pitch angle rate.

**Example 6:** The computer system of any of **Examples 1-5,** wherein the processing circuitry is further configured to cause a tip-over mitigation action to be performed responsive to detection of the risk of upcoming tip-over.

**Example 7:** The computer system of **Example 6,** wherein the tip-over mitigation action comprises one or more of: issuing a warning message via an operator interface, inhibiting continued lifting of load, and lowering a lifted load.

**Example 8:** The computer system of any of **Examples 1-7,** wherein the processing circuitry is further configured to dynamically vary the normal force condition based on one or more of: load mass, load position, ground surface banking, vehicle width, and oscillation of lifted load.

**Example 9:** A vehicle comprising the computer system of any of **Examples 1-8.**

**Example 10:** A computer-implemented method for detecting risk of upcoming tip-over for a vehicle, comprising: acquiring (by processing circuitry of a computer system) normal force(s) of the vehicle, wherein the normal force(s) comprise a rear wheel normal force; and detecting (by the processing circuitry) risk of upcoming tip-over responsive to the normal force(s) fulfilling a normal force condition.

**Example 11:** The method of **Example 10,** wherein the normal force condition comprises the rear wheel normal force being less than a threshold value for rear wheel normal force.

**Example 12:** The method of any of **Examples 10-11,** wherein the normal force(s) further comprise a front wheel normal force, and wherein the normal force condition comprises a ratio between the front wheel normal force and the rear wheel normal force exceeding a threshold value for normal force ratio.

**Example 13:** The method of any of **Examples 10-12,** further comprising acquiring (by the processing circuitry) a pitch angle of the vehicle, wherein detecting the risk of upcoming tip-over is further responsive to the pitch angle fulfilling a pitch angle condition.

**Example 14:** The method of **Example 13,** wherein the pitch angle condition comprises one or more of: the pitch angle exceeding a threshold value for pitch angle, and a change rate of the pitch angle (exceeding a threshold value for pitch angle rate.

**Example 15:** The method of any of **Examples 10-14,** further comprising causing (by the processing circuitry) a tip-over mitigation action to be performed responsive to detecting the risk of upcoming tip-over.

**Example 16:** The method of **Example 15,** wherein the tip-over mitigation action comprises one or more of: issuing a warning message via an operator interface, inhibiting continued lifting of load, and lowering a lifted load.

**Example 17:** The method of any of **Examples 15-16,** wherein detecting risk of upcoming tip-over comprises determining a risk category, and wherein causing the tip-over mitigation action comprises causing different tip-over mitigation actions for different risk categories.

**Example 18:** The method of any of **Examples 10-17,** wherein the normal force condition varies dynamically based on one or more of: load mass, load position, ground surface banking, vehicle width, and oscillation of lifted load.

**Example 19:** A computer program product comprising program code for performing, when executed by the processing circuitry, the method of any of **Examples 10-18.**

**Example 20:** A non-transitory computer-readable storage medium comprising instructions, which when executed by the processing circuitry, cause the processing circuitry to perform the method of any of **Examples 10-18.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (500) for detecting risk of upcoming tip-over for a vehicle (100, 200, 300), the computer system comprising processing circuitry configured to:

   acquire normal force(s) (391, 392) of the vehicle, wherein the normal force(s) comprise a rear wheel normal force (391); and

detect risk of upcoming tip-over responsive to the normal force(s) fulfilling a normal force condition (430).

2. The computer system of claim 1, wherein the processing circuitry is further configured to acquire a pitch angle (332) of the vehicle, wherein detecting the risk of upcoming tip-over is further responsive to the pitch angle fulfilling a pitch angle condition (435).

3. The computer system of any of claims 1-2, wherein the processing circuitry is further configured to cause a tip-over mitigation action to be performed responsive to detection of the risk of upcoming tip-over.

4. The computer system of any of claims 1-3, wherein the processing circuitry is further configured to dynamically vary the normal force condition based on one or more of: load mass, load position, ground surface banking, vehicle width, and oscillation of lifted load.

5. A vehicle (100, 200, 300) comprising the computer system (500) of any of claims 1-4.

6. A computer-implemented method (400) for detecting risk of upcoming tip-over for a vehicle (100, 200, 300), comprising:

acquiring (410), by processing circuitry of a computer system, normal force(s) (391, 392) of the vehicle, wherein the normal force(s) comprise a rear wheel normal force (391); and detecting (440), by the processing circuitry, risk of upcoming tip-over responsive to the normal force(s) fulfilling a normal force condition (430).

7. The method of claim 6, wherein the normal force condition (430) comprises the rear wheel normal force (391) being less than a threshold value for rear wheel normal force.

8. The method of any of claims 6-7, wherein the normal force(s) further comprise a front wheel normal force (392), and wherein the normal force condition (430) comprises a ratio between the front wheel normal force (392) and the rear wheel normal force (391) exceeding a threshold value for normal force ratio.

9. The method of any of claims 6-8, further comprising acquiring (420), by the processing circuitry, a pitch angle (332) of the vehicle, wherein detecting the risk of upcoming tip-over is further responsive to the pitch angle fulfilling a pitch angle condition (435).

10. The method of claim 9, wherein the pitch angle condition (435) comprises one or more of: the pitch angle (332) exceeding a threshold value for pitch angle, and a change rate of the pitch angle (332) exceeding a threshold value for pitch angle rate.

11. The method of any of claims 6-10, further comprising causing (450), by the processing circuitry, a tip-over mitigation action to be performed responsive to detecting the risk of upcoming tip-over.

12. The method of claim 11, wherein the tip-over mitigation action comprises one or more of: issuing a warning message (452) via an operator interface, inhibiting (454) continued lifting of load, and lowering (456) a lifted load.

13. The method of any of claims 6-12, wherein the normal force condition (430) varies dynamically based on one or more of: load mass, load position, ground surface banking, vehicle width, and oscillation of lifted load.

14. A computer program product (600) comprising program code for performing, when executed by the processing circuitry, the method of any of claims 6-13.

15. A non-transitory computer-readable storage medium (650) comprising instructions, which when executed by the processing circuitry, cause the processing circuitry to perform the method of any of claims 6-13.

**Amended claims in accordance with Rule 137(2) EPC.**

1. A computer system (500) for detecting risk of upcoming tip-over for a vehicle (100, 200, 300), the computer system comprising processing circuitry configured to:

acquire normal force(s) (391, 392) of the vehicle, wherein the normal force(s) comprise a rear wheel normal force (391) and a front wheel normal force (392); and detect risk of upcoming tip-over responsive to the normal force(s) fulfilling a normal force condition (430), wherein the normal force condition (430) comprises the rear wheel normal force (391) being less than a threshold value for rear wheel normal force and a ratio between the front wheel normal force (392) and the rear wheel normal force (391) exceeding a threshold value for normal force ratio.

2. The computer system of claim 1, wherein the processing circuitry is further configured to acquire a pitch angle (332) of the vehicle, wherein detecting the risk of upcoming tip-over is further responsive to the pitch angle fulfilling a pitch angle condition (435).

3. The computer system of any of claims 1-2, wherein the processing circuitry is further configured to cause a tip-over mitigation action to be performed responsive to detection of the risk of upcoming tip-over.

4. The computer system of any of claims 1-3, wherein the processing circuitry is further configured to dynamically vary the normal force condition based on one or more of: load mass, load position, ground surface banking, vehicle width, and oscillation of lifted load.

5. A vehicle (100, 200, 300) comprising the computer system (500) of any of claims 1-4.

6. A computer-implemented method (400) for detecting risk of upcoming tip-over for a vehicle (100, 200, 300), comprising:

   acquiring (410), by processing circuitry of a computer system, normal force(s) (391, 392) of the vehicle, wherein the normal force(s) comprise a rear wheel normal force (391) and a front wheel normal force (392); and
   detecting (440), by the processing circuitry, risk of upcoming tip-over responsive to the normal force(s) fulfilling a normal force condition (430), wherein the normal force condition (430) comprises the rear wheel normal force (391) being less than a threshold value for rear wheel normal force and a ratio between the front wheel normal force (392) and the rear wheel normal force (391) exceeding a threshold value for normal force ratio.

7. The method of claim 6, further comprising acquiring (420), by the processing circuitry, a pitch angle (332) of the vehicle, wherein detecting the risk of upcoming tip-over is further responsive to the pitch angle fulfilling a pitch angle condition (435).

8. The method of claim 7, wherein the pitch angle condition (435) comprises one or more of: the pitch angle (332) exceeding a threshold value for pitch angle, and a change rate of the pitch angle (332) exceeding a threshold value for pitch angle rate.

9. The method of any of claims 6-8, further comprising causing (450), by the processing circuitry, a tip-over mitigation action to be performed responsive to detecting the risk of upcoming tip-over.

10. The method of claim 9, wherein the tip-over mitigation action comprises one or more of: issuing a warning message (452) via an operator interface, inhibiting (454) continued lifting of load, and lowering (456) a lifted load.

11. The method of any of claims 6-10, wherein the normal force condition (430) varies dynamically based on one or more of: load mass, load position, ground surface banking, vehicle width, and oscillation of lifted load.

12. A computer program product (600) comprising program code for performing, when executed by the processing circuitry, the method of any of claims 6-11.

13. A non-transitory computer-readable storage medium (650) comprising instructions, which when executed by the processing circuitry, cause the processing circuitry to perform the method of any of claims 6-11.

(a)

(b)

**FIG. 1**

**FIG. 2**

FIG. 3

400

**410**
Acquire normal force(s)

**420**
Acquire pitch angle

no **430**
Normal force condition
fulfilled?

yes

no **435**
Pitch angle condition
fulfilled?

yes

**440**
Tip-over risk detected

**450**
Cause mitigation action

**452**
Warn

**454**
Inhibit

**456**
Lower

FIG. 4

FIG. 5

FIG. 6

FIG. 7

Europäisches
Patentamt

European
Patent Office

Office européen
des brevets

# EUROPEAN SEARCH REPORT

**Application Number**

EP 24 20 2227

## DOCUMENTS CONSIDERED TO BE RELEVANT

| Category | Citation of document with indication, where appropriate, of relevant passages | Relevant to claim |
|---|---|---|
| X | US 2013/211679 A1 (GERDES MANFRED [DE] ET AL) 15 August 2013 (2013-08-15) | 1-15 |
| Y | * the whole document * | 4,13 |
|   | ----- | |
| Y | US 2012/232763 A1 (MIZUOCHI MARIKO [JP] ET AL) 13 September 2012 (2012-09-13) | 4,13 |
| A | * abstract; figures 1-17c * | 1,6,14, |
|   | * paragraph [0209] - paragraph [0213] * | 15 |
|   | ----- | |

**CLASSIFICATION OF THE APPLICATION (IPC)**

INV.
E02F9/24
B60W30/04
B66C23/90
B66F17/00
E02F9/20

**TECHNICAL FIELDS SEARCHED (IPC)**

E02F
B66F
B60W
B66C

The present search report has been drawn up for all claims

| Place of search | Date of completion of the search | Examiner |
|---|---|---|
| Munich | 19 February 2025 | Ferrien, Yann |

EPO FORM 1503 03.82 (P04C01)

## ANNEX TO THE EUROPEAN SEARCH REPORT
## ON EUROPEAN PATENT APPLICATION NO.

EP 24 20 2227

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | Publication date | Patent family member(s) | Publication date |
|---|---|---|---|
| US 2013211679 A1 | 15-08-2013 | CN 102917973 A | 06-02-2013 |
| | | DE 102010023069 A1 | 08-12-2011 |
| | | EP 2580152 A1 | 17-04-2013 |
| | | JP 5714100 B2 | 07-05-2015 |
| | | JP 2013529165 A | 18-07-2013 |
| | | US 2013211679 A1 | 15-08-2013 |
| | | WO 2011154129 A1 | 15-12-2011 |
| US 2012232763 A1 | 13-09-2012 | CN 102575457 A | 11-07-2012 |
| | | EP 2492404 A1 | 29-08-2012 |
| | | JP 5491516 B2 | 14-05-2014 |
| | | JP WO2011049079 A1 | 14-03-2013 |
| | | KR 20120095875 A | 29-08-2012 |
| | | US 2012232763 A1 | 13-09-2012 |
| | | WO 2011049079 A1 | 28-04-2011 |

EPO FORM P0459

For more details about this annex : see Official Journal of the European Patent Office, No. 12/82